# EUROPÄISCHE PATENTSCHRIFT

(11) **EP 1 237 767 B1**
(45) Veröffentlichungstag und Bekanntmachung des Hinweises auf die Patenterteilung: **14.09.2005**
(21) Anmeldenummer: 00983180.1
(22) Anmeldetag: 28.11.2000
(51) Int. Cl.: B60T 11/26

(54) **BREMSFLÜSSIGKEITSBEHÄLTER**
BRAKE FLUID CONTAINER
RESERVOIR DE LIQUIDE DE FREIN

(30) Priorität: 02.12.1999 DE 19958195
(43) Veröffentlichungstag der Anmeldung: 11.09.2002
(73) Patentinhaber: Continental Teves AG & Co. oHG, 60488 Frankfurt am Main (DE)
(72) Erfinder: TANDLER, Peter, 61479 Kronberg/Ts. (DE)
(86) Internationale Anmeldenummer: PCT/EP2000/011875
(87) Internationale Veröffentlichungsnummer: WO 2001/040045

(56) Entgegenhaltungen:
- EP-A- 0 372 909
- DE-A- 3 627 499
- DE-A- 3 925 927
- DE-A- 19 620 582

## Beschreibung

Die Erfindung betrifft einen Bremsflüssigkeitsbehälter mit einer Füllstandswarnvorrichtung umfassend wenigstens einen Schwimmer und einen mittels dem Schwimmer magnetbetätigbaren elektrischen Schalter, wobei der Schwimmer aus einem ersten Werkstoff und einem zweiten Werkstoff mit feindispersen Dauermagnetwerkstoffteilchen besteht und der Schwimmer einen Grundkörper aus dem ersten Werkstoff aufweist.

Nachteilig ist bei einer bekannten Warnvorrichtung gemäß der DE 37 16 135 A1, daß der Schwimmer in Hinblick auf eine Einschuböffnung für einen Magneten eine aufwendig herzustellende Form aufweist, wobei insbesondere die Werkzeugkosten als zu hoch angesehen werden. Ferner ist es nachteilig, daß der Magnet in einem gesonderten Arbeitsschritt in den Schwimmer eingeschoben werden muß.

Aus der DE 39 25 927 A1 ist ein Magnetschwimmer aus geschäumten Kunstharz mit darin dispergiertem magnetisiertem Magnetpulver bekannt.

Aufgabe der vorliegenden Erfindung ist es, den Herstellungsaufwand für einen Bremsflüssigkeitsbehälter und insbesondere für den Schwimmer der Füllstandswarnvorrichtung zu reduzieren und eine gezielte Anordnung des zweiten Werkstoffes zu ermöglichen.

Diese Aufgabe wird gelöst durch die kennzeichnenden Merkmale des Patentanspruchs 1. Erfindungsgemäß fällt der Magnet als selbständig zu montierendes Bauteil weg, indem der Magnetwerkstoff als Beschichtung auf dem Schwimmerwerkstoff aufgebracht ist.

Dadurch wird es ermöglicht, den Magnetwerkstoff auf eine gewünschte Stelle des Schwimmers aufzutragen.

Vorteilhafte Weiterbildungen der Erfindung gehen aus Unteransprüchen im Zusammenhang mit der Beschreibung und der Zeichnung hervor.

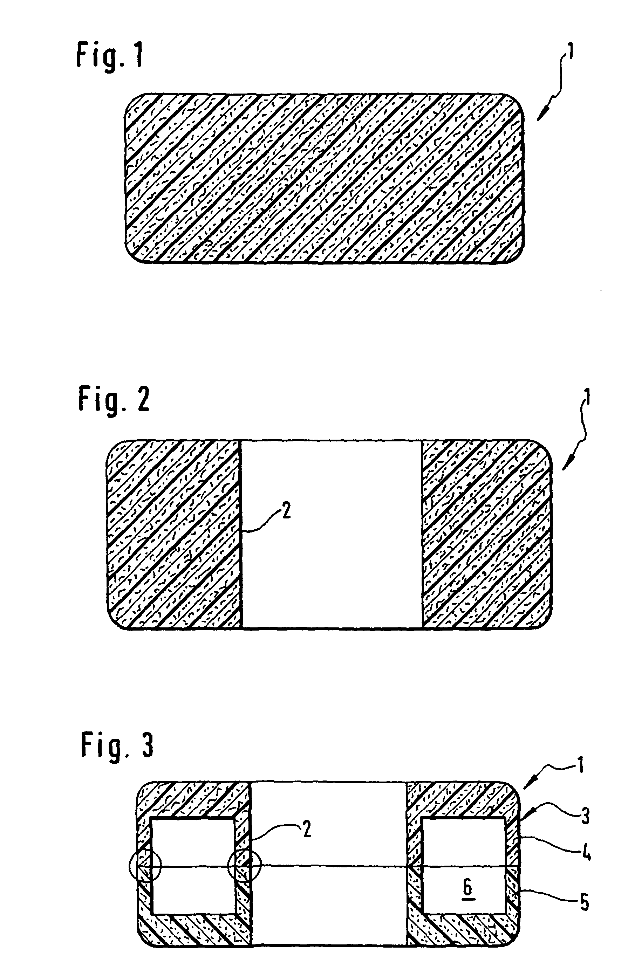

Die Figuren 1 bis 3 zeigen stark vergrößert einen Schwimmer 1 von einer Füllstandswarnanzeige, welche vorzugsweise bei einer Kraftfahrzeugbremsvorrichtung angewendet wird. Die Füllstandswarnanzeige umfasst wenigstens einen Schwimmer 1 und einen mittels dem Schwimmer 1 magnetbetätigbaren elektrischen Schalter, vorzugsweise Reed-Schalter. Der Schwimmer 1 gemäß den Figuren 2 und 3 weist eine mittige Ausnehmung 2 auf, welche einer Führung des Schwimmers 1 längs einer Säule dient. Im inneren dieser Säule befindet sich dabei ein elektrischer Schalter. Hinsichtlich weiterer Einzelheiten sowie der Funktion einer Warnanzeige wird auf die in der Beschreibungseinleitung genannte Schrift verwiesen, deren diesbezüglicher Offenbarungsgehalt in vollem Umfang einbezogen wird. Der Schwimmer 1 besteht aus einem ersten vorzugsweise aufschäumbaren Werkstoff, auf dem sich eine Beschichtung aus einem zweiten Werkstoff mit feindispersen Dauermagnetwerkstoffteilchen befindet.

Der Schwimmer 1 ist gemäß Fig. 1 vorzugsweise einstückig und die Magnetwerkstoffteilchen darin gleichmäßig verteilt. Es ist vorteilhaft, wenn der Schwimmer ein aus Gehäuseteilen 4,5 bestehendes Gehäuse 3 mit wenigstens einem Hohlraum 6 aufweist.

Selbst wenn die physikalische Dichte (das spezifische Gewicht) des Schwimmerwerkstoffs im Vergleich mit der Dichte der Flüssigkeit, in die er eintaucht, gering ist so daß grundsätzlich ausreichend Auftrieb erzeugt wird, hilft die vorstehende Maßnahme ein unbeabsichtigtes Unterspülen des Schwimmers zu vermeiden. Mit anderen Worten wird der Auftrieb vergrößert. Ferner kann die notwendige Gesamtgröße des Schwimmers (im Vergleich mit den Schwimmern nach den Fig. 1 und 2) mit dieser Maßnahme verringert werden. Der Schwimmer besteht folglich aus dem ersten Werkstoff von geringem spezifischen Gewicht und dem zweiten Werkstoff mit größerem spezifischen Gewicht, als das spezifische Gewicht von der Flüssigkeit (insbesondere Bremsflüssigkeit) und der Hohlraum 6 ist luftleer oder mit einem Medium gefüllt ist, welches ein geringeres spezifisches Gewicht als Bremsflüssigkeit aufweist. In diesem Zusammenhang ist insbesondere auch eine Füllung mit einem Gas von geringem spezifischen Gewicht denkbar, um den Auftrieb zu vergrößern. Gemäß dem Ausführungsbeispiel umfaßt das Gehäuse wenigstens zwei Bauteile, welche flüssigkeitsdicht miteinander verbunden sind.

Es bietet sich an, das Gehäuse 3 aus dem ersten Werkstoff wie einen einfachen Kunststoffwerkstoff zu spritzen, zu schäumen oder zu extrudieren, ohne die Erfindung zu verlassen. Gehäuseteile welche einen Hohlraum 6 umschließen sollen, lassen sich relativ einfach in dem mit einem Kreis gekennzeichneten Bereich am Umfang umlaufend flüssigkeitsdicht miteinander verkleben oder verschweißen.

Vorzugsweise ist der erste Werkstoff für das Gehäuse 3 ein bremsflüssigkeitsresistenter Kunststoff, insbesondere Polyamid (PA 6, PA 12), Polypropylen (PP), Polyethylen (PE) oder Polyphenylensulfid (PPS).

Es ist denkbar, den Schwimmerkörper in dem gewünschten Bereich nahe des Reedkontakts mit dem Magnetwerkstoff zu beschichten. Eine besonders einfache Verarbeitung ergibt sich ferner, wenn der Magnetwerkstoff mit seinen Magnetpartikeln feindispers in einem lack- oder leimartigen Werkstoff enthalten ist, welcher einfach auf die gewünschte Stelle eines beispielsweise geschäumten Schwimmerkörpers aufgetragen wird. Wenn dieser Auftrag eine porenschließende Wirkung besitzt kann es sogar möglich sein, von geschlossenporig schäumbaren Werkstoffen Abstand zu nehmen, sofern die magnetische Beschichtung am gesamten und fluidbenetzten Umfang des Schwimmers vorgesehen wird. Es ist in einem solchen Fall sogar denkbar, von einem (brems-) flüssigkeitsbeständigen Werkstoff Abstand zu nehmen, weil ein mit einer porenverschließenden Magnetbeschichtung versehener Schwimmergrundwerkstoff nicht unmittelbar mit Flüssigkeit in Berührung kommt.

## Patentansprüche

1. Bremsflüssigkeitsbehälter mit einer Füllstandswarnvorrichtung umfassend wenigstens einen Schwimmer (1) und einen mittels dem Schwimmer (1) magnetbetätigbaren elektrischen Schalter, wobei der Schwimmer (1) aus einem ersten Werkstoff und einem zweiten Werkstoff mit feindispersen Dauermagnetwerkstoffteilchen besteht und der Schwimmer (1) einen Grundkörper aus dem ersten Werkstoff aufweist, **dadurch gekennzeichnet, daß** sich auf dem Grundkörper des Schwimmers (1) eine Beschichtung aus dem zweiten Werkstoff mit feindispersen Dauermagnetwerkstoffteilchen befindet.

2. Behälter nach Anspruch 1, **dadurch gekennzeichnet, daß** der Schwimmer (1) einstückig ist.

3. Behälter nach Anspruch 1 oder 2, **dadurch gekennzeichnet, daß** der Schwimmer (1) ein Gehäuse (3) mit wenigstens einem Hohlraum (6) aufweist.

4. Behälter nach einem oder mehreren der vorhergehenden Ansprüche, **dadurch gekennzeichnet, daß** der Schwimmer bestehend aus dem ersten und zweiten Werkstoff ein spezifisches Gewicht aufweist, welches größer ist, als das spezifische Gewicht von Bremsflüssigkeit und daß der Hohlraum luftleer ist oder mit einem Medium gefüllt ist, welches ein geringeres spezifisches Gewicht als Bremsflüssigkeit aufweist.

5. Behälter nach einem oder mehreren der vorhergehenden Ansprüche, **dadurch gekennzeichnet, daß** das Gehäuse (3) aus wenigstens zwei Bauteilen (4,5) besteht, welche flüssigkeitsdicht miteinander verbunden sind.

6. Behälter nach einem oder mehreren der vorhergehenden Ansprüche, **dadurch gekennzeichnet, daß** das Gehäuse (3) gespritzt, geschäumt oder extrudiert ist.

7. Behälter nach einem oder mehreren der vorhergehenden Ansprüche, **dadurch gekennzeichnet, daß** die Gehäuseteile (4,5) miteinander flüssigkeitsdicht verklebt oder verschweißt sind.

8. Behälter nach einem oder mehreren der vorhergehenden Ansprüche, **dadurch gekennzeichnet, daß** der erste Werkstoff für das Gehäuse (3) ein bremsflüssigkeitsresistenter Kunststoff, insbesondere Polyamid (PA 6, PA 12), Polypropylen (PP), Polyethylen (PE) oder Polyphenylensulfid (PPS) ist.

## Claims

1. Brake fluid container with a fluid level indicator, comprising at least one float (1) and an electrical switch which is actuatable magnetically by means of float (1), wherein the float (1) is composed of a first material and a second material with finely dispersed permanent-magnet material particles and the float (1) includes a base member made of the first material,
**characterized in that** on the base member of the float (1) there is a coating made of the second material with finely dispersed permanent-magnet material particles.

2. Container as claimed in claim 1,
**characterized in that** the float (1) is of integral design.

3. Container as claimed in claim 1 or 2,
**characterized in that** the float (1) has a housing (3) with at least one cavity (6).

4. Container as claimed in any one or more of the preceding claims,
**characterized in that** the float comprising the first and second materials has a specific weight which is higher than the specific weight of brake fluid, and **in that** the cavity is exhausted of air or filled with a medium which has a lower specific weight than brake fluid.

5. Container as claimed in any one or more of the preceding claims,
**characterized in that** the housing (3) is composed of at least two components (4, 5) which are fluid-tightly interconnected.

6. Container as claimed in any one or more of the preceding claims,
**characterized in that** the housing (3) is injection-moulded, frothed, or extruded.

7. Container as claimed in any one or more of the preceding claims,
**characterized in that** the housing parts (4, 5) are cemented or welded fluid-tightly to one another.

8. Container as claimed in any one or more of the preceding claims,
**characterized in that** the first material for the housing (3) is a plastic material that is resistant to brake fluid, especially polyamide (PA 6, PA 12), polypropylene (PP), polyethylene (PE), or polyphenylenesulfide (PPS).

## Revendications

1. Réservoir de liquide de frein avec un dispositif de témoin de niveau comprenant au moins un flotteur (1) et un interrupteur électrique pouvant être actionné magnétiquement au moyen du flotteur (1), le flotteur (1) étant constitué d'un premier matériau et d'un deuxième matériau avec des particules de matériau magnétique permanent en fine dispersion, et le flotteur (1) comportant un corps de base constitué du premier matériau, **caractérisé en ce que** sur le corps de base du flotteur (1) se trouve un revêtement du deuxième matériau avec des particules de matériau magnétique permanent en fine dispersion.

2. Réservoir selon la revendication 1, **caractérisé en ce que** le flotteur (1) est d'une seule pièce.

3. Réservoir selon la revendication 1 ou 2, **caractérisé en ce que** le flotteur (1) comporte un boîtier (3) avec au moins une cavité (6).

4. Réservoir selon une ou plusieurs des revendications précédentes, **caractérisé en ce que** le flotteur, constitué du premier et du deuxième matériau, présente un poids spécifique qui est supérieur au poids spécifique du liquide de frein et **en ce que** la cavité ne contient pas d'air ou est remplie d'un fluide qui présente un poids spécifique inférieur à celui du liquide de frein.

5. Réservoir selon une ou plusieurs des revendications précédentes, **caractérisé en ce que** le boîtier (3) est constitué d'au moins deux composants (4, 5) qui sont reliés entre eux de manière étanche aux liquides.

6. Réservoir selon une ou plusieurs des revendications précédentes, **caractérisé en ce que** le boîtier (3) est injecté, expansé ou extrudé.

7. Réservoir selon une ou plusieurs des revendications précédentes, **caractérisé en ce que** les parties (4, 5) du boîtier sont collées ou soudées entre elles de manière étanche aux liquides.

8. Réservoir selon une ou plusieurs des revendications précédentes, **caractérisé en ce que** le premier matériau pour le boîtier (3) est une matière plastique résistante au liquide de freinage, en particulier une polyamide (PA 6, PA 12), du polypropylène (PP), du polyéthylène (PE) ou du polysulfure de phénylène (PPS).
